# FASCICULE DE BREVET EUROPEEN

(11) **EP 0 380 378 B1**
(45) Date de publication et mention de la délivrance du brevet: **15.09.1993**
(21) Numéro de dépôt: 90400044.5
(22) Date de dépôt: 05.01.1990
(51) Int. Cl.: H04L 12/40

(54) **Procédé et dispositif d'accès hiérarchisé à un réseau de transmission d'informations**
Verfahren und Vorrichtung für hierarchischen Zugriff zu einem Nachrichtenübertragungsnetz
Method and device for the hierarchical access to an information transmission network

(30) Priorité: 24.01.1989 FR 8900823
(43) Date de publication de la demande: 01.08.1990
(73) Titulaire: AUTOMOBILES PEUGEOT, 75116 Paris (FR); AUTOMOBILES CITROEN, 92200 Neuilly-sur-Seine (FR)
(72) Inventeur: Herbault, Patrick, F-75016 Paris (FR)
(74) Mandataire: Polus, Camille

(56) Documents cités:
- EP-A- 0 217 571
- WO-A-84/02629
- US-A- 4 071 908
- IEEE TRANSACTIONS ON CONSUMER ELECTRONICS, vol. CE-27, no. 1, février 1981, pages 102-116, IEEE, New York, US; C.H. KAPLINSKY: "The D2B a one logical wire bus for consumer applications"

## Description

La présente invention concerne un procédé d'accès hiérarchisé à un réseau de transmission d'informations par réponse dans une trame de communication, de stations reliées à ce réseau, et un dispositif pour la mise en oeuvre de ce procédé, applicables notamment dans l'industrie automobile.

Les procédés de transmision d'informations par réponse dans une trame de communication consistent en ce qu'au moins une des stations reliées au réseau, émet un début de trame de message, encore appelé entête, et en ce qu'en fonction de cette entête de message, une autre station accède au réseau pour transmettre la fin de la trame de message contenant notamment une information d'évènements ou de données de cette station.

Ces procédés de transmission ont déjà été décrits dans le cadre d'un réseau multi-maîtres multi-esclaves (voir document E.D.N. Electrical Design News, volume 31, n° 7, 3 avril 1986, pages 153 à 162).

Le but de l'invention est de proposer une généralisation de ce procédé à un procédé d'accès hiérarchisé tel que chaque station puisse avoir un rang d'accès au réseau.

A cet effet, l'invention a pour objet un procédé d'accès hiérarchisé à un réseau de transmission d'informations par réponse dans une trame de communication, de stations reliées à ce réseau, caractérisé en ce qu'on affecte à chaque station reliée au réseau, une caractéristique de rang d'accès au réseau, cette caractéristique de rang d'accès étant le nombre de bits déjà émis par une autre station reliée au réseau avant que la station considérée puisse accèder à ce réseau pour transmettre ses propres informations.

Selon un autre aspect, l'invention a également pour objet un dispositif pour la mise en oeuvre du procédé décrit précédemment.

L'invention sera mieux comprise à l'aide de la description qui va suivre, donnée uniquement à titre d'exemple et faite en se référant aux dessins annexés, sur lesquels :
- la Fig.1 illustre un procédé de transmission d'informations par réponse dans la trame de message;
- la Fig.2 illustre le fonctionnement de ce procédé dans le cas d'un codage par modulation de largeur d'impulsions;
- les Fig.3, 4 et 5 illustrent le fonctionnement de ce procédé dans le cas d'un codage du type Manchester;
- les Fig.6 et 7 illustrent le fonctionnement de ce procédé dans le cas d'un codage NRZ (non retour à zéro);
- les Fig.8 et 9 illustrent le fonctionnement de ce procédé dans le cas d'un codage NRZ (non retour à zéro) avec bit de bourrage;
- la Fig.10 illustre une trame de message modifiée dans laquelle l'emplacement d'un bit dominant de réponse est encadré par deux bits récessifs; et
- la Fig.11 représente un mode de réalisation d'un dispositif pour la mise en oeuvre du procédé selon l'invention.

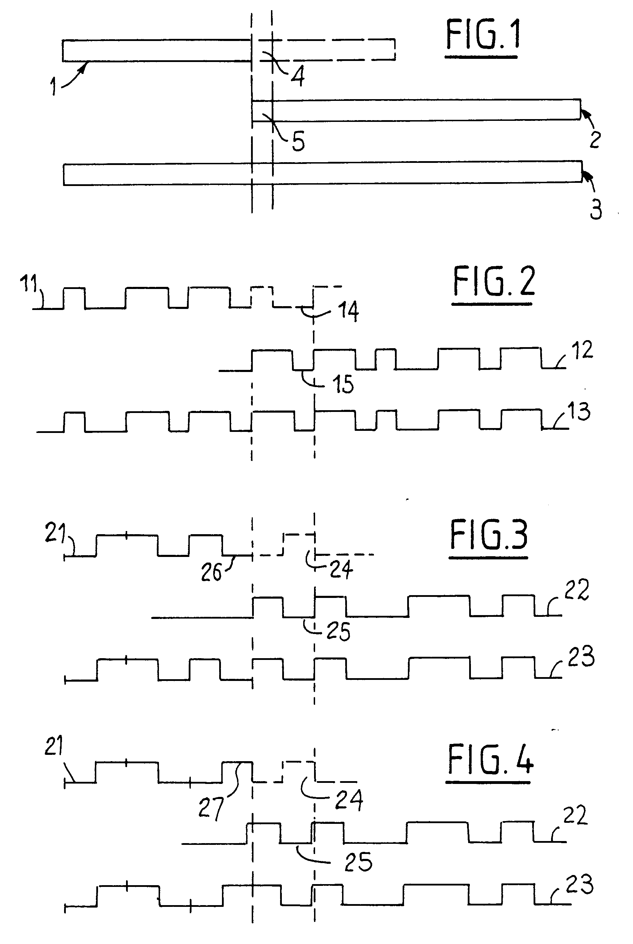

Ainsi qu'on peut le voir sur la Fig. 1 , un procédé de transmission d'informations dans un réseau de communication entre plusieurs stations, par réponse dans la trame, consiste en ce qu'au moins une des stations reliées à ce réseau, émet un début de message également appelé entête 1 et en ce qu'en fonction de cette entête de message, une autre station accède au réseau pour transmettre la fin de la trame de message 2 contenant une information d'évènements ou de données de cette station.

Ainsi par exemple, une station esclave reconnaît l'entête de message 1 émise sur le réseau, par comparaison bit à bit de cette entête à une ou plusieurs valeurs qui lui sont propres et émet la fin de message 2 contenant l'information requise par la station maître ayant émis l'entête 1.

La trame 3 de message ainsi formée contient à la fois l'identification du message et l'information correspondante et forme donc une trame normale de communication pouvant être interprétée par toutes les autres stations reliées à ce réseau.

Plus particulièrement, si le réseau de communication est un réseau pouvant avoir un état logique dominant et un état logique récessif, la station maître émet une entête de message 1 se terminant par un bit récessif 4 que la station esclave peut dominer par un bit dominant 5 pour initialiser sa réponse.

La station maître perd ainsi l'accès au réseau par un arbitrage de propriété bit à bit classique.

Ce procédé a déjà été décrit dans les systèmes multi-maîtres multi-esclaves et il est possible de le généraliser pour déterminer un procédé d'accès hiérarchisé tel que chaque station considérée puisse avoir une caractéristique déterminée de rang d'accès au réseau.

Cette caractéristique de rang d'accès au réseau est le nombre de bits déjà émis par une autre station avant que la station considérée puisse avoir accès au réseau pour transmettre ses propres informations.

Dans cette définition, une station maître est de rang O dans la mesure où elle peut initier elle-même une trame de message. Par contre, les stations esclaves sont de rang maximum, c'est à dire de caractéristique correspondant à la taille de l'information permettant d'identifier totalement le message.

Ce procédé d'accès à un réseau conduit à des réalisations qui peuvent différer en fonction de la technique choisie d'encodage des bits.

A des fins d'illustration, les codages les plus couramment utilisés sont décrits plus en détail par la suite, ces codages étant :
- le codage en modulation de largeur d'impulsions PWM (Pulse Width Modulation),
- le codage Manchester,
- le codage NRZ non retour à zéro (non return to zero), et
- le codage NRZ non retour à zéro avec bit de bourrage (bit stuffing).

Dans la suite de la description, on s'est limité à un réseau dont le mode d'accès entre station maître est un arbitrage bit à bit sur l'entête du message, le réseau ayant uniquement un état logique dominant et un état logique récessif.

Le codage en modulation de largeur d'impulsions PWM permet de coder des bits dominants et des bits récessifs, un bit récessif étant formé d'un créneau dominant suivi de deux créneaux récessifs, tandis qu'un bit dominant est formé de deux créneaux dominants suivis d'un créneau récessif.

Dans ce type de codage, la station devant effectuer une réponse dans la trame comprenant une entête 11 (Fig.2) et une fin de message 12 formant une trame de communication 13, doit simplement dominer le bit récessif 14 émis par la station maître à la suite de l'entête 11 , par un bit dominant 15 en synchronisme avec ce bit récessif de l'entête.

Une légère désynchronisation des stations n'a pas d'effet sur la forme des signaux de la trame.

Par contre, si le codage utilisé est un codage du type Manchester, l'analyse est différente.

En effet, en codage Manchester de type L qui est le plus commode pour l'arbitrage bit à bit, un bit récessif est un créneau récessif suivi d'un créneau dominant tandis qu'un bit dominant est un créneau dominant suivi d'un créneau récessif.

La station devant effectuer une réponse dans la trame doit émettre un bit dominant en synchronisme avec le bit récessif de l'entête émis par la station maître. Ainsi, l'entête 21 (Fig.3) est combinée à la fin de message 22 pour former la trame 23, en dominant le bit récessif 24 émis à la suite de l'entête 21, par un bit dominant 25 émis par la station devant transmettre ses informations sur le réseau.

Si le bit précédant le bit récessif finit par un créneau récessif 26, une légère désynchronisation entre stations ne produit pas d'effet sur le signal résultant 23. Par contre, et comme on peut le voir plus particulièrement sur la Fig.4, si le bit précédant le bit récessif finit par un créneau dominant 27, la forme résultante des signaux en 23 dépend de la synchronisation des stations.

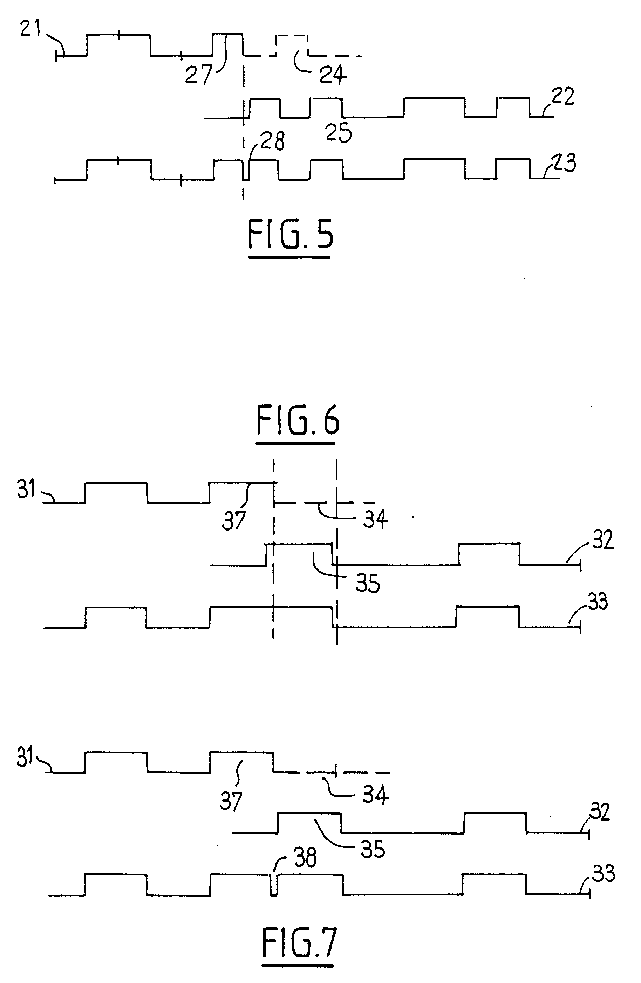

Ainsi par exemple, si la station émettant la réponse, émet en avance par rapport à l'entête (Fig.4), le nouveau créneau ne fait que prolonger l'état dominant du créneau précédent 27. Par contre, et comme on peut le voir plus particulièrement sur la Fig.5, si la station émettant sa réponse émet en retard, le signal résultant peut retomber à l'état récessif pendant quelques instants avant de remonter à l'état dominant.

Ce signal parasite 28 peut être partiellement masqué par les caractéristiques des émetteurs-récepteurs de lignes, mais également non détecté par une partie des stations qui peuvent alors soit détecter une erreur, soit se synchroniser sur ce signal parasite, ceci étant à éviter.

Pour cela, il faut que le début dominant de la réponse n'apparaisse pas si le créneau précédent est dominant, c'est à dire que ce début ne soit autorisé que si le créneau précédent est récessif.

Cette règle peut être illustrée dans le cas où l'entête d'un message se termine par deux bits de mode permettant l'écriture de données et la lecture de données dans une station esclave. Le dernier bit d'identification de message sera appelé par la suite MO tandis que l'avant-dernier bit sera quant à lui appelé M1.

En codage Manchester, ces bits seront caractérisés de la façon suivante :
- M1 récessif, MO récessif : demande d'écriture
- M1 récessif, MO dominant : écriture
- M1 dominant, MO récessif : demande de lecture
- M1 dominant, MO dominant : réponse dans la trame à une demande de lecture.

Au contraire, si comme représenté de façon équivalente sur les Fig. 6 et 7, dans lesquelles les références 31 à 35 et 37 et 38 indiquent des signaux équivalents aux signaux 21 à 25 et 27 et 28 des Fig.3,4 et 5, respectivement, le codage utilisé est un codage NRZ dans lequel chaque créneau représente un bit, la caractérisation des bits de mode est la suivante :
- M1 dominant, MO récessif : demande d'écriture
- M1 dominant, MO dominant : écriture
- M1 récessif, MO récessif : demande de lecture
- M1 récessif, MO dominant : réponse dans la trame à une demande de lecture.

Ceci permet de respecter la règle qui veut que le premier bit dominant de la réponse soit précédé d'un état récessif, cet état terminant l'entête.

Dans le cas où le codage est un codage Manchester, le dernier bit de l'entête est donc un bit dominant et dans le cas du codage NRZ, un bit récessif.

Si le codage NRZ est associé à une synchronisation par bit de bourrage (bit stuffing) , une contrainte supplémentaire apparaît.

En effet, le mécanisme de bourrage de bit consiste à insérer après une séquence de n bits de niveau identique, un bit de valeur logique opposée de façon à créer une transition permettant aux récepteurs de garder la synchronisation de bit du message.

Bien entendu, en réception, ce bit spécial de transition est éliminé.

Cette technique est par contre sensible aux erreurs, une perturbation du réseau pouvant engendrer une désynchronisation d'un ou de plusieurs bits.

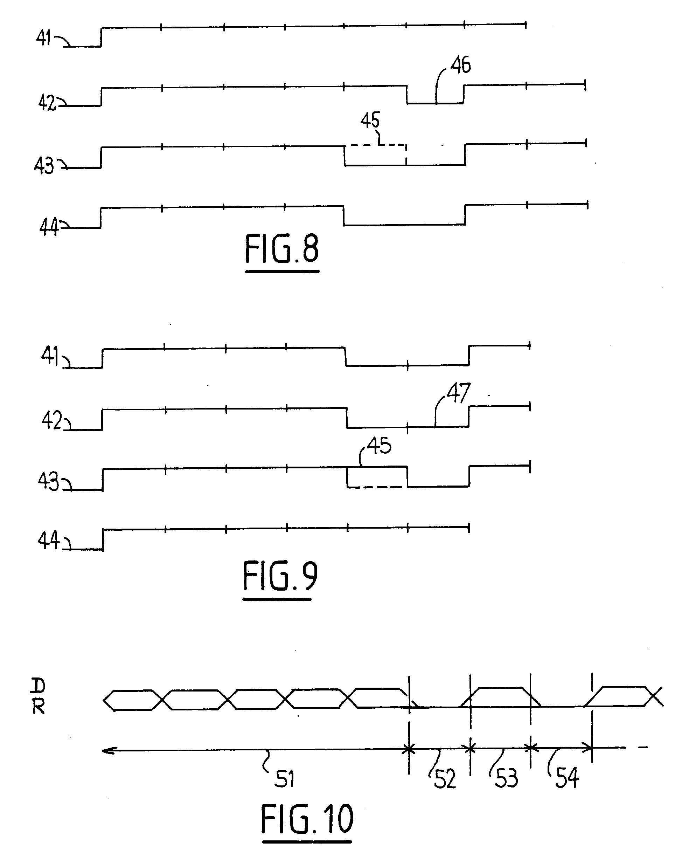

Sur les Fig.8 et 9. on a représenté des exemples dans lesquels le signal original à transmettre est indiqué en 41, le signal encodé selon la technique de bit de bourrage avec n = 5 est illustré en 42, le signal perturbé est illustré en 43, le signal décodé par suppression au bit de bourrage est illustré en 44, tandis que le signal perturbé 43 comporte un bit erroné 45.

Le premier exemple représente sur la Fig.8 montre que le bit de bourrage 46 a été reçu comme un bit normal et de ce fait la réception est en retard d'un bit.

Par contre,le deuxième exemple représenté sur la Fig.9 montre qu'un bit normal émis 47 a été reçu comme un bit de bourrage et de ce fait, la réception est en avance d'un bit.

En cas de perturbation, la station effectuant la réponse dans la trame peut donc être en avance ou en retard d'un bit.

Pour résoudre ces problèmes, il est préférable d'encadrer l'emplacement du bit dominant de réponse par des bits récessifs et le premier bit dominant de la réponse est alors précédé d'un niveau récessif conformément à la règle formulée précédemment, un décalage d'un bit d'une unité étant détecté immédiatement, la trame n'étant pas conforme.

Dans le cas d'une station esclave, si le dernier bit de réponse est le dernier bit de l'identificateur de message, on peut soit consacrer des bits de l'identificateur, soit prévoir de façon permanente des bits de valeur fixe récessive pour déterminer ces états. Dans cette dernière solution représentée sur la Fig. 10, la séquence des bits d'entête comporte des bits d'identification de message 51 , un bit récessif délimiteur d'identificateur 52, un bit de question-réponse 53 et un bit récessif de délimiteur de bit question-réponse 54.

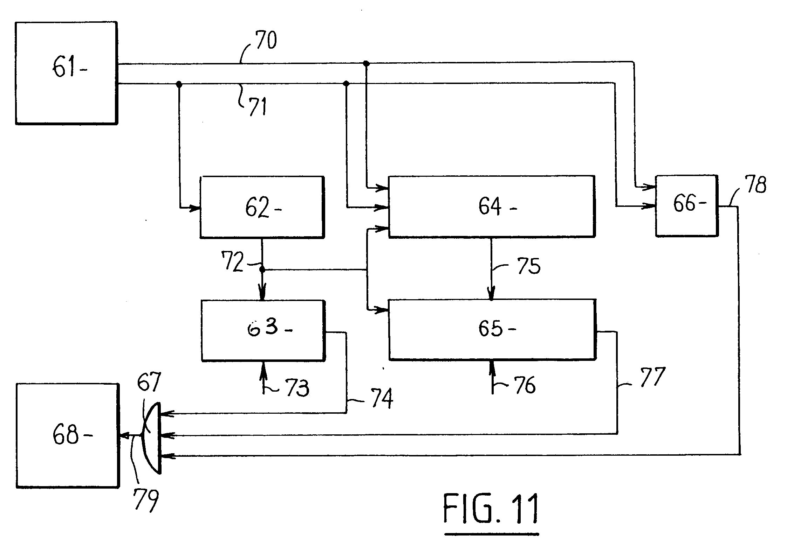

On a représenté sur la Fig.11, un mode de réalisation d'un dispositif pour la mise en oeuvre du procédé décrit précédemment, de transmission d'informations par réponse dans la trame. Ce dispositif comporte un bloc de réception 61, un compteur de bits 62, un bloc de comparaison 63 du comptage de bits à une valeur r déterminée, un bloc de mémorisation 64 des bits d'entête reçus, un bloc de comparaison 65 de l'entête à une ou plusieurs valeurs caractéristiques de la station, une bascule de mémorisation 66 du bit précédent, une porte à trois entrées 67 et enfin un bloc d'émission 68 comportant une entrée de validation.

Le bloc de réception 61 fournit la valeur du bit reçu 70 ainsi qu'une horloge 71.

Cette horloge incrémente le compteur 62 qui assure le comptage des bits. Cette valeur i de comptage est transmise par un signal 72 aux différents blocs reliés à ce compteur, à savoir les blocs 63,64 et 65.

Ainsi, cette valeur est transmise au bloc de comparaison 63 afin d'être comparée à la valeur r 73, le signal de sortie 74 de ce bloc indiquant si la valeur i du comptage est supérieure ou égale à r. Le signal 72 est également transmis au bloc de mémorisation 64 ainsi qu'au bloc de comparaison 65.

Le bloc 64 de mémorisation de l'entête peut être réalisé à partir d'une bascule adressable par le signal 72 et qui nécessite en outre comme entrées de données le signal 70 ainsi que le signal d'horloge 71 émanant du bloc de réception 61. La valeur de l'entête ainsi obtenue est comparée jusqu'au bit de rang i de façon dynamique, aux i premiers bits d'une ou de plusieurs valeurs caractéristiques 76 affectées à cette station. Le signal 77 qui en est déduit indique l'égalité jusqu'au ième bit.

La bascule 66 recevant le signal 70 et l'horloge 71 émanant du bloc de réception 61 , permet de mémoriser la dernière valeur de bit et facultativement suivant les types d'encodage de bit, d'utiliser sa sortie directe ou inverse comme signal de validation.

Un signal de sortie 78 de cette bascule ainsi que les signaux 74 et 77 de sortie des blocs 63 set 65 respectivement sont raccordés aux entrées de la porte ET 67 qui fournit un signal d'entrée 79 d'autorisation d'effectuer une réponse dans la trame, ce signal étant appliqué à l'entrée du bloc d'émission 68.

Suivant les applications, on peut utiliser partiellement l'ordre de priorité r d'accès au réseau.

Par ailleurs, soit en raison de l'impact sur l'affectation de bits dans l'entête du message, soit parce que la priorité r fait l'objet d'une programmation par broches externes, on peut se limiter à un nombre plus faible de valeurs possibles. Par exemple, il est possible de définir le rang r modulo 4, ce qui permet de programmer sur deux broches externes :
- r = 0 accès de type maître
- r = 4 accès à partir du 4ème bit
- r = 8 accès à partir du 8ème bit
- r = 12 accès du type esclave.

Les différentes applications possibles de ce procédé et de ce dispositif peuvent par exemple résider dans :
- la réalisation de stations esclaves avec réponse dans la trame,
- l'adressage d'un bloc de stations, que l'on veut scruter en parallèle, par exemple un ensemble de stations comportant des entrées par un clavier à touches. Ainsi, en cas de défauts ou de mauvais contacts, ces stations ne peuvent émettre en permanence que si une station maître les sollicite en émettant les r premiers bits de l'entête communs à ces stations, et
- l'implantation de stations sur un réseau arborescent comportant des répéteurs. Une station placée sur une branche terminale ne peut transmettre qu'après que les répéteurs soient correctement positionnés, directement ou automatiquement, en fonction des premiers bits de l'entête du messge en cours.

## Revendications

1. Procédé d'accès hiérarchisé à un réseau de transmission d'informations par réponse dans une trame de communication, de stations reliées à ce réseau, caractérisé en ce qu'on affecte à chaque station reliée au réseau une caractéristique de rang d'accès au réseau, cette caractéristique de rang d'accès étant le nombre de bits déjà émis par une autre station reliée au réseau avant que la station considérée ne puisse accéder à ce réseau pour transmettre ses propres informations.

2. Procédé selon la revendication 1, caractérisé en ce que l'entête de message se termine par un état récessif.

3. Procédé selon la revendication 2, dans lequel le codage utilisé est un codage du type Manchester, caractérisé en ce que l'entête du message se termine par un bit dominant dans le cas où la station adressée doit émettre une réponse.

4. Procédé selon la revendication 2, dans lequel le codage utilisé est un codage du type NRZ, caractérisé en ce que l'entête de message se termine par un bit récessif dans le cas où la station adressée doit émettre une réponse.

5. Procédé selon la revendication 2, dans lequel le codage utilisé est un codage du type NRZ associé à un bit de bourrage, caractérisé en ce que le premier bit dominant de la réponse est encadré par deux bits récessifs.

6. Dispositif d'accès hiérarchisé à un réseau de transmission d'informations par réponse dans une trame de communication, de stations reliées à ce réseau, pour la mise en oeuvre du procédé selon la revendication 1, caractérisé en ce qu'il comporte un compteur (62) de bits émis sur le réseau, relié à une entrée d'un bloc de comparaison (63) du nombre de bits émis sur le réseau à une valeur caractéristique de rang d'accès affectée à la station, ces moyens de comparaison étant reliés à des moyens d'émission (68) de la station pour autoriser l'émission d'informations sur le réseau par cette station lorsque le nombre de bits émis sur le réseau est au moins égal à la valeur caractéristique affectée à la station.

## Patentansprüche

1. Verfahren für den hierarchischen Zugriff zu einem Nachrichtenübertragungsnetz durch Antwort innerhalb eines Kommunikationsrasters von Stationen, die an dieses Netz angeschlossen sind,
**dadurch gekennzeichnet, daß**
jeder der an das Netz angeschlossenen Stationen eine charakteristische Rangordnung für den Zugriff zu dem Netz zugeordnet wird, wobei diese charakteristische Rangordnung für den Zugriff die Anzahl der Bits ist, welche bereits von einer anderen an das Netz angeschlossenen Station abgegeben wurden, bevor die betreffende Station zu diesem Netz Zugriff erhält, um ihre eigenen Informationen zu übertragen.

2. Verfahren nach Anspruch 1,
**dadurch gekennzeichnet, daß**
der Nachrichtenvorsatz durch einen rezessiven Zustand beendet wird.

3. Verfahren nach Anspruch 2, in dem die verwendete Kodierung eine Kodierung vom Typ Manchester ist,
**dadurch gekennzeichnet, daß**
der Nachrichtenvorsatz mit einem dominierenden Bit endet, wenn die angepeilte Station eine Antwort aussenden soll.

4. Verfahren nach Anspruch 2, in dem die verwendete Kodierung eine Kodierung vom Typ NRZ ist,
**dadurch gekennzeichnet, daß**
der Nachrichtenvorsatz in einem rezessiven Bit endet, wenn die angepeilte Station eine Antwort aussenden soll.

5. Verfahren Nach Anspruch 2, in dem die verwendete Kodierung eine mit einem Sperrbit verbundene Kodierung von Typ NRZ ist,
**dadurch gekennzeichnet, daß**
das erste dominierende Bit der Antwort von zwei rezessiven Bits eingerahmt wird.

6. Vorrichtung für den hierarchischen Zugriff zu einem Nachrichtenübertragungsnetz durch Antwort innerhalb eines Kommunikationsrasters von an dieses Netz angeschlossenenen Stationen für die Durchführung des Verfahrens nach Anspruch 1,
**dadurch gekennzeichnet, daß**
sie einen Zähler (62) für die in diesem Netz ausgesendeten Bits aufweist, welcher an den Eingang eines Blockes (63) für den Vergleich der Anzahl von an das Netz abgegebenen Bits mit einem der Station zugeordneten charakteristischen Zugriffswert angeschlossen ist, wobei diese Vergleichsmittel an Sendermittel (68) der Station angeschlossen sind, um die Aussendung von Informationen durch diese Station an das Netz zu ermöglichen, wenn die Anzahl der in dem Netz ausgesandten Informationen mindestens gleich dem charakteristischen Wert ist, welcher der Station zugeordnet ist.

## Claims

1. Process for hierarchized access to a network for transmission of information by response in a communication frame, from stations connected to this network, characterized in that each station connected to the network is allocated a characteristic of ranking for access to the network, this characteristic of ranking for access being the number of bits already transmitted by another station connected to the network before the station concerned can access this network in order to transmit its own information.

2. Process according to Claim 1, characterized in that the message header ends in a recessive state.

3. Process according to Claim 2, in which the encoding used in encoding of the Manchester type, characterized in that the message header ends in a dominant bit in a case in which the station addressed has to transmit a response.

4. Process according to Claim 2, in which the encoding used is encoding of the NRZ type, characterized in that the message header ends in a recessive bit in a case in which the station addressed has to transmit a response.

5. Process according to Claim 2, in which the encoding used in encoding of the NRZ type with bit stuffing, characterized in that the first dominant bit of the response is framed by two recessive bits.

6. Device for hierarchized access to network for transmission of information by response in a communication frame, from stations connected to this network, for the implementation of the process according to Claim 1, characterized in that it comprise a counter (62) of bits transmitted on the network, connected to an input of a block for comparison (63) of the number of bits transmitted on the network with a characteristic value for the ranking for access allocated to the station, these means of comparison being connected to means of transmission (68) from the station in order to authorize the transmission of information on the network by this station when the number of bits transmitted on the network is at least equal to the characteristic value allocated to the station.
